# EUROPEAN PATENT SPECIFICATION

(11) **EP 1 447 602 B1**
(45) Date of publication and mention of the grant of the patent: **08.07.2009**
(21) Application number: 04100325.2
(22) Date of filing: 29.01.2004
(51) Int. Cl.: F16K 31/06, F16K 15/18, F01L 1/34

(54) **Oil flow control valve for a cam phaser**
Öldurchflussregelventil für einen Nockenwellenversteller
Soupape de contrôle de débit d'huile pour un déphaseur d'arbre à cames

(30) Priority: 17.02.2003 GB 0303571
(43) Date of publication of application: 18.08.2004
(73) Proprietor: Delphi Technologies, Inc., Troy, MI 48007 (US)
(72) Inventor: BERNDORFER, Axel, 54453, Nittel (DE); WANLIN, Hugues, 6880, BERTRIX (BE); BRAHY, Philippe, 6860, Les Fossés (BE)
(74) Representative: Robert, Vincent

(56) References cited:
- DE-A- 19 847 021
- DE-A- 19 908 146
- US-A- 5 291 860
- US-A- 5 386 807
- US-A- 5 497 738
- US-A1- 2002 162 594
- US-B1- 6 321 767

## Description

### FIELD OF THE INVENTION

The present invention generally relates to an oil flow control valve for a cam phaser.

### BACKGROUND OF THE INVENTION

Cam phasers are used to control the angular relationship of the pulley/sprocket to the camshaft of an engine. A variable cam phaser (VCP) allows changing the phase relationship while the engine is running. Typically, a cam phaser is used to shift the intake cam on a dual overhead cam engine in order to broaden the torque curve of the engine, to increase peak power at high rpm, and to improve the idle quality. Also, the exhaust cam can be shifted by a cam phaser in order to provide internal charge diluent control, which can significantly reduce HC and NOₓ emissions, or to improve fuel economy.

Cam phasers are controlled by hydraulic systems, which use pressurized lubrication oil from the engine in order to change the relative position between camshaft and crankshaft, thus altering the valve timing. The advance or retard position of the camshaft is commanded via an oil flow control valve (in the following called OCV). The OCV controls the oil flow to different ports entering a cam phaser, thus controlling the angular position of the camshaft relative to pulley or sprocket. However, the efforts in the valve train pressurize the oil contained in the chambers of the cam phaser such that the oil pressure inside the cam phaser reaches peaks, which can be higher than the oil control supply pressure, i.e., the oil pressure supplied by the engine. This can lead to a certain amount of reverse oil flow across the OCV, diminishing the phase rate performance of the cam phasing system.

To avoid the reverse oil flow under the above mentioned circumstances, a check valve has been integrated in the oil passage of either the cylinder head or the crankcase. Such a check valve also ensures that the cam phaser does not empty out in cases when the oil pressure is reduced, for example when the engine is stopped. However, this approach adds significant cost to the cylinder head or engine block. Also, the implementation of the check valve can be difficult because of oil routing. Furthermore, the check valve should not be placed too far away from the cam phaser in order to be still effective.

US 5,386,807 discloses a camshaft adjustment device comprising a servomotor and pump means which, together with a control means, is arranged as a complex subassembly at the end of a camshaft. The control means has a sliding member operating as a spool, which is received in a sleeve-like element, and in which it can reciprocate when actuated by a solenoid. The sleeve-like element is in turn received within an external part, that includes an extension with a check-valve, for communication with the lubricant circuit of the internal combustion engine.

US 5,497,738 relates to a hydraulic control system for controlling the operation of a variable camshaft timing system. A spool valve comprises a cylindrical member and a vented spool, which is slideable to and fro within a cavity defined by the cylindrical member. Check valves are arranged in the inlet line connecting the spool valve to recesses in the sprocket. A check valve is also provided in a bypass line that bypasses the spool valve.

It is known from US 5,291,860 and DE 199 08 146 to integrate a check valve on the spool of an OCV.

### OBJECT OF THE INVENTION

It is an object of the present invention to provide an OCV for a cam phaser which comprises a check valve and which has an improved performance in contrast to the OCV described in US 5,291,860. This object is achieved by an OCV for a cam phaser as claimed in claim 1.

### SUMMARY OF THE INVENTION

One basic idea underlying the invention is essentially based on the discovery that the check valve on the spool of the OCV known from US 5,291,860 can perturb the equilibrium of the spool, since the pressure balance of the spool is completely disturbed under certain operating conditions. An increasing oil pressure on the check valve generates forces acting on the spool and forcing the spool in one direction. However, this can influence the oil pressure in the cam phaser and, thus, the precision of the adjustment of the cam phaser. Furthermore, it can diminish the cam phaser's performance.

The invention relates to an OCV for a cam phaser comprising a check valve. The check valve is integrated in the housing of the OCV in order to avoid any influencing of the equilibrium of a spool of the OCV when the oil pressure is suddenly changing in the OCV due to varying efforts in the cam phaser caused by the valve train. The invention enables a better control of the OCV and hence of the cam phaser. This improves the engine behaviour in that more precise valve control times can be achieved

A further advantage of the invention is that the closer the check valve is placed to the pressurized chambers of the cam phaser the less oil volume is comprised between the chambers and the check valve. Therefore, the volume of oil pressurized by the cam phaser is low and, thus, no or less damping exists which enhances the valve control precision. Since the spool does not contain the check valve, it is lighter than the spool of the OCV described in US 5,291,860. Accordingly, the inertia of the snespool of the inventive OCV is small and, therefore, the spool can react faster than a spool with an integrated check valve.

Preferably, the check valve is located upstream (i.e. with regard to the oil flow entering the OCV via its inlet) of a spool of the OCV in order to reduce the forces acting on the spool of the OCV.

Advantageously, the check valve is fixedly mounted to the housing of the OCV upstream of the spool. This leads to a compact design of the OCV, which can easily replace existing OCVs without check valves.

In a first preferred embodiment, the OCV is fed from its bottom and the check valve is placed near the inlet of the OCV. In this embodiment, the check valve preferably comprises a ball or a disk as valve member. The ball or disk is preferably spring biased in the closing direction, but could also simply move due to pressure variations.

Preferably, the check valve is placed upstream of an inlet filter of the oil flow control valve.

In order to achieve a very compact design of the OCV, the check valve can also be integrated in an inlet filter of the OCV.

### BRIEF DESCRIPTION OF THE DRAWING

The present invention will now be described, by way of example, with reference to the accompanying drawing in which:

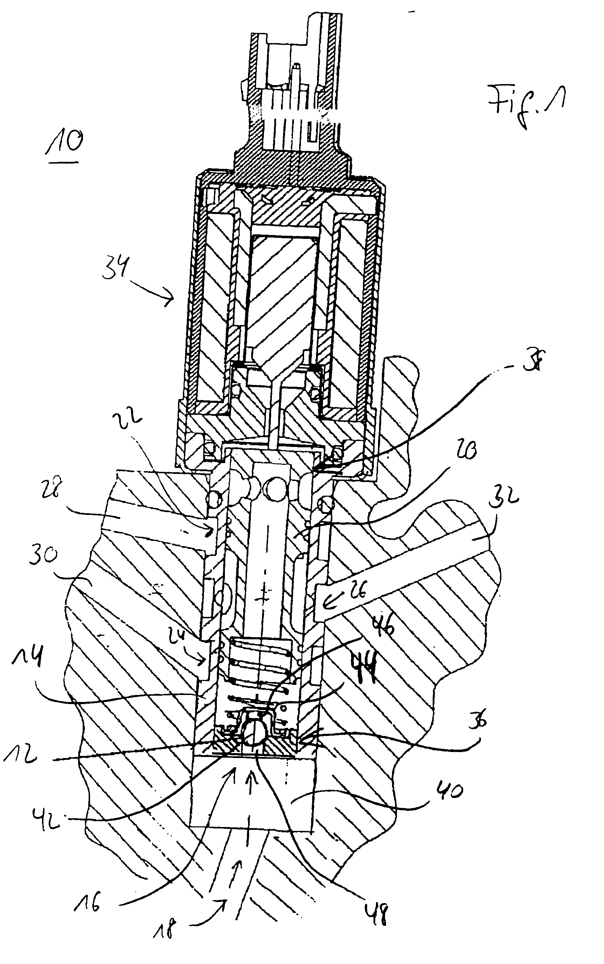

Fig.1 is a longitudinal section view through a first embodiment of an OCV according to the invention with a check valve placed near the bottom inlet of the OCV.

### DETAILED DESCRIPTION OF PREFERRED EMBODIMENTS

Preferred embodiments of an OCV for a cam phaser in accordance with the invention will now be described.

Fig.1 shows an OCV 10 for controlling the oil flow from an oil supply channel 18 into a cam phaser of an internal combustion engine. The OCV 10 is generally mounted in a bore in the engine cylinder head. The OCV 10 comprises a housing 14, a spool 20 located in the housing 14, and a control unit 34 for controlling the position of the spool 20 in the housing 14.

The housing 14 of the OCV 10 is formed like a sleeve comprising openings 22, 24, and 26 which cooperate with oil channels 28, 30 and 32 arranged in the cylinder head. Among these channels 28, 30 and 32, two of them are typically used to supply the cam phaser with oil, and the third is a vent channel back to the engine oil sump.

The oil flow through the OCV 10 and the channels 28, 30 and 32 is essentially controlled by the position of the spool 20 which is reciprocally mounted in the housing 14, as is well known in the art. The placement of the spool 20 in the housing is controlled by the control unit 34, which preferably includes a solenoid actuator.

In the OCV 10, the check valve is thus not mounted in the spool, but is associated with the housing 14 itself.

The housing 14 of the OCV 10 has two ends 36 and 38. On end 36, opposite to the control unit 34, a check valve 12 is provided in the housing 14. This end 36 is located near to the oil supply channel 18. On the other end 38, the control unit 34 for controlling the spool 20 of the OCV 10 is mounted.

In Fig.1, the bore in which the OCV 10 is fixed also comprises the oil supply channel 18 through which the OCV 10 receives pressurized oil from the engine, and distributes/receives oil to/from channels 28, 30, and 32 for controlling the oil supply to the cam phaser. In the present embodiment, oil from the engine enters an antechamber 40, formed between the end 36 of the OCV and the bottom of the bore, under high pressure. If the antechamber 40, located before the inlet 16 of the OCV 10, is filled with oil, the oil enters the inlet 16 of the OCV 10 over an inlet passage 48 and the check valve 12, which contains a ball 42, a cap 44 for bearing the ball 42, and a spring 46 for closing the check valve 12 by pressing the ball 42 against the inlet passage 48. Both the oil pressure inside the spool 20 and the forces of the spring 46 press the ball 42 against the inlet passage 48.

The check valve 12 opens if the oil pressure in the antechamber 40 exceeds the forces of the spring 46 and/or the oil pressure inside the spool 20. On the other hand, if the oil pressure inside the spool 20 and/or the forces of the spring 46 exceed the oil pressure in the antechamber 40, e.g., if the oil pressure from the engine diminishes, the ball 42 is pressed against the inlet passage 48 and closes the check valve 12.

The integration of the check valve 12 in one end of the housing 14 does not influence the position of the spool 20. In particular, no additional forces acts on the spool 20 upon closing of the check valve 12 regardless of the oil pressure. Therefore, the position of the spool 20 is essentially controlled by a magnetic solenoid force generated by the control unit 34. According to this, a precise control of the OCV 10 is achieved independently from the oil pressure inside and outside of the cam phaser.

Though in the above description one preferred embodiment of the OCV according to the invention was explained, it is clear for a skilled person that further embodiments of the OCV fall under the scope of the invention as defined by the appended claims, e.g., different placements of the check valve in the housing of the OCV.

### LIST OF REFERENCE NUMERALS

- 10: oil flow control valve (OCV)
- 12: check valve
- 14: housing of the OCV 10
- 16: inlet of the OCV 10
- 18: oil supply channel
- 20: spool of the OCV 10
- 22, 24, 26: openings of the OCV 10
- 28,30,32: oil channels
- 34: control unit of OCV 10
- 36, 38: ends of the housing 14 of the OCV 10
- 40: antechamber
- 42: ball
- 44: cap
- 46: spring
- 48: inlet passage of the OCV 10

## Claims

1. Oil flow control valve (10) for a cam phaser, said oil flow control valve (10) comprising a housing (14) defining a spool cavity, a spool (20) reciprocally mounted in said spool cavity of said housing (14) and a check valve (12), **characterized in that** said check valve (12) is integrated in said spool cavity of said housing (14) outside of said spool (20).

2. Valve according to claim 1, **characterized in that** the check valve (12) is located upstream of the spool (20) of the oil flow control valve (10).

3. Valve according to claim 2, **characterized in that** the check valve (12) is fixedly mounted to the housing (14) of the oil flow control valve (10) upstream of the spool (20).

4. Valve according to any of the claims 1 to 3, **characterized in that** the oil flow control valve (10) is fed from its bottom and the check valve (12) is placed near the inlet (16) of the oil flow control valve (10).

5. Valve according to claim 4, **characterized in that** the check valve (12) comprises a ball (42) and a spring (46) or a disk and a spring.

6. Valve according to claim 5, **characterized in that** said check valve (12) comprises a biasing spring associated with the ball (42), respectively the disk.

## Patentansprüche

1. Öldurchflussregelventil (10) für einen Nockenwellenversteller, wobei das Öldurchflussregelventil (10) ein Gehäuse (14), das einen Kolben-Hohlraum definiert, einen Kolben (20), der reziprok in dem Kolben-Hohlraum des Gehäuses (14) angebracht ist, und ein Rückschlagventil (12) aufweist, **dadurch gekennzeichnet, dass** das Rückschlagventil (12) in dem Kolben-Hohlraum des Gehäuses (14) außerhalb des Kolbens (20) integriert ist.

2. Ventil gemäß Anspruch 1, **dadurch gekennzeichnet, dass** sich das Rückschlagventil (12) flussaufwärts von dem Kolben (20) des Öldurchflussregelventils (10) befindet.

3. Ventil gemäß Anspruch 2, **dadurch gekennzeichnet, dass** das Rückschlagventil (12) an dem Gehäuse (12) des Öldurchflussregelventils (10) flussaufwärts von dem Kolben (20) fest angebracht ist.

4. Ventil gemäß einem der Ansprüche 1 bis 3, **dadurch gekennzeichnet, dass** das Öldurchflussregelventil (10) von unten versorgt wird und das Rückschlagventil (12) in der Nähe des Einlasses (16) des Öldurchflussregelventils (10) platziert ist.

5. Ventil gemäß Anspruch 4, **dadurch gekennzeichnet, dass** das Rückschlagventil (12) eine Kugel (42) und eine Feder (46) oder eine Platte und eine Feder aufweist.

6. Ventil gemäß Anspruch 5, **dadurch gekennzeichnet, dass** das Rückschlagventil (12) eine Biasing-Feder aufweist, die zu der Kugel (42) beziehungsweise der Platte gehört.

## Revendications

1. Soupape de commande de débit d'huile (10) pour un déphaseur d'arbre à cames, ladite soupape de commande de débit d'huile (10) comprenant un boîtier (14) définissant une cavité à tiroir, un tiroir (20) monté en va-et-vient dans ladite cavité à tiroir dudit boîtier (14) et un clapet anti-retour (12), **caractérisée en ce que** ledit clapet anti-retour (12) est intégré dans ladite cavité à tiroir dudit boîtier (14) à l'extérieur dudit tiroir (20).

2. Soupape selon la revendication 1, **caractérisée en ce que** le clapet anti-retour (12) est situé en amont du tiroir (20) de la soupape de commande de débit d'huile (10).

3. Soupape selon la revendication 2, **caractérisée en ce que** le clapet anti-retour (12) est monté de manière fixe sur le boîtier (14) de la soupape de commande de débit d'huile (10) en amont du tiroir (20).

4. Soupape selon l'une quelconque des revendications 1 à 3, **caractérisée en ce que** la soupape de commande de débit d'huile (10) est alimentée depuis sa partie basse et le clapet anti-retour (12) est placé au voisinage de l'entrée (16) de la soupape de commande de débit d'huile (10).

5. Soupape selon la revendication 4, **caractérisée en ce que** le clapet anti-retour (12) comprend une bille (42) et un ressort (46), ou bien un disque et un ressort.

6. Soupape selon la revendication 5, **caractérisée en ce que** ledit clapet anti-retour (12) comprend un ressort de sollicitation associé à la bille (42), ou respectivement au disque.
